# EUROPÄISCHE PATENTSCHRIFT

(11) **EP 0 581 046 B1**
(45) Veröffentlichungstag und Bekanntmachung des Hinweises auf die Patenterteilung: **23.09.1998**
(21) Anmeldenummer: 93110564.7
(22) Anmeldetag: 02.07.1993
(51) Int. Cl.: G11B 23/023

(54) **Behälter für Bandkassetten**
Container for tape cassettes
Récipient pour cassettes à bande

(30) Priorität: 10.07.1992 DE 9209267 U
(43) Veröffentlichungstag der Anmeldung: 02.02.1994
(73) Patentinhaber: EMTEC Magnetics GmbH, 67059 Ludwigshafen (DE)
(72) Erfinder: Schoettle, Klaus, D-6900 Heidelberg (DE)

(56) Entgegenhaltungen:
- EP-A- 0 440 424
- BE-A- 662 534
- US-A- 5 109 982

## Beschreibung

Die Erfindung betrifft einen Behälter, im wesentlichen von Rechteck - Quaderform für Bandkassetten mit erhöhtem Kopfteil, insbesondere für Kompakt - Kassetten mit einem Bodenteil, der wenigstens eine Bodenwand sowie eine Rückwand und/oder eine Vorderwand und Bodenteil - Seitenwände aufweist, und mit zumindest aus einer Deckelwand bestehendem Deckelteil, der eine Aufnahmetasche mit wenigstens einer Taschenvorderwand für die Bandkassette aufweist und wobei entlang der Querachse des Behälters die Wanddicke der Deckelwand von ihrer Außenkante in Richtung auf die Aufnahmetasche abnimmt.

Für Kompakt-Kassetten mit zwei koplanar angeordneten Wickelkernen als Bandträger ist ein Kassettenbehälter in Etuiform, z.B. mit der DE-AS 13 00 864, bekannt.

Der Kopfteil der Kassette ist darin in einem Taschen-Deckteil befindlich, dessen lichte Weite wesentlich größer als die Höhe des Kopfteils ist. An der Bodenwand sind Arretierzapfen angeordnet, die bei geschlossenem Behälter mehr oder weniger tief in die Wickelkerne eingreifen. Je nachdem, wie tief die Zapfen eingreifen, liegt die Kassette entweder schief oder fast gerade zu den Behälter-Boden- und Deckelwänden, so daß viel nutzloser Raum im Behälter vorhanden ist und derselbe dadurch zu hoch wird.

Die Boden- und Deckelwände derartiger Behälter sind von der zu öffnenden Seite des Behälters her gesehen mit niedriger Wanddicke und den Gelenkverbindungen zu mit größerer Wanddicke ausgebildet, um die im Spritzguß hergestellten Teile entformen zu können.

Es ist ein weiterer Behälter der oben skizzierten Art auf dem Kompakt-Kassettenmarkt bekannt, der durch eine äußerst dünne Wandstärke der Taschenvorderwand und der angrenzenden Teile der Bodenwand gekennzeichnet ist, um im Bereich der Kopferhöhung der Kassette die Gesamthöhe des Behälters zu verringern.

Aufgrund der Herstellung im Spritzguß sind Deckelwand und Taschenvorderwand keilförmig auseinanderstrebend angeordnet, so daß einer Verringerung der Gesamthöhe des Behälters Grenzen gesetzt sind.

US - A - 5,109,982 beschreibt einen Behälter für eine Kompaktkassette mit einem Bodenteil und einem eine Aufnahmetasche aufweisenden Deckelteil, wobei die Wanddicke des Deckelteils in Richtung Aufnahmetasche, in Form einer abgeschrägten Stufe abnimmt, um den erhöhten Kopfteil der Kompaktkassette aufnehmen zu können.

Der Erfindung liegt die Aufgabe zugrunde, einen Behälter der beschriebenen Art mit möglichst geringer Höhe bei unveränderter Einschubrichtung der Kassette in den Behälter bereitzustellen.

Die Aufgabe wird mit einem Behälter, im wesentlichen von Rechteck-Quaderform, für Bandkassetten mit erhöhtem Kopfteil, insbesondere für Kompakt-Kassetten, mit einem Bodenteil, der wenigstens eine Bodenwand sowie eine Rückwand und/oder eine Vorderwand und Bodenteil-Seitenwände aufweist, und mit einem zumindest aus einer Deckelwand bestehenden Deckelteil, der eine Aufnahmetasche mit wenigstens einer Taschenvorderwand für die Bandkassette aufweist, damit gelöst, daß entlang der Querachsen des Behälters die Deckelwand von ihrer Außenlängskante in Richtung auf die Aufnahmetasche eine kontinuierlich abnehmende Wanddicke aufweist.

Gegenüber den herkömmlichen Behältern (Snap Packs) ergibt sich eine deutliche Höhenreduzierung um mehr als 2 mm und gegenüber der Behälterversion mit verminderter Taschenvorderwand ergibt sich eine Höhenverringerung um mehr als einen halbem Millimeter.

Gegenüber anderen Behälterversionen, in denen die Kassette nicht mit dem Kopfteil, sondern mit dem Rückteil zuerst eingeschoben wird, muß sich der Benutzer des erfindungsgemäßen Behälters nicht umgewöhnen und legt die Kassette mit dem Kopfteil voran in den Behälter.

Es ist herstellungsmäßig günstig, wenn die Innenfläche der Taschenvorderwand zur Innenfläche der Deckelwand, die die abnehmende Wanddicke besitzt, zumindest parallel angeordnet ist.

Als vorteilhaft hat sich zwischen der Innenfläche und der Außenfläche der Deckelwand ein Winkel zwischen 30 und 120 Winkelminuten, insbesondere von 30 bis 60 Winkelminuten, erwiesen.

Es ist bei der Dimensionierung zweckmäßig, daß die Wanddicke der Deckelwand von der Außenlängskante in Richtung zur Aufnahmetasche im Verhältnis im Bereich zwischen etwa 3:1 bis 1,5:1, insbesondere von etwa 2:1 abnimmt.

Es ist auch möglich, daß die Wanddicke der Bodenwand in derselben Richtung wie die Deckelwand abnimmt. Die Innenfläche der Bodenwand kann zweckmäßig zu ihrer Außenfläche ebenfalls einen kleinen Winkel aufweisen. Wenn der Behälter ohne Aufnahmetasche für den erhöhten Kopfteil der Kassette ausgebildet ist und Boden- und Deckelteile über Gelenkeinrichtungen miteinander verbunden sind, kann entlang der Querachsen des Behälters die Deckelwand und/oder die Bodenwand von der jeweiligen Außenlängskante in Richtung zur Achse der Gelenkeinrichtungen eine abnehmende Wanddicke aufweisen. Diese abnehmende Wanddicke kann zweckmäßig dieselben Merkmale aufweisen, die oben zur Aufnahmetaschen-Version beschrieben wurden.

Eine vorteilhafte Behälter-Variante ist auch damit gegeben, daß der geschlossene Behälter einen im wesentlichen quaderförmigen, innerhalb der Außenkontur schrägliegenden Aufnahmeraum für die Kassette aufweist.

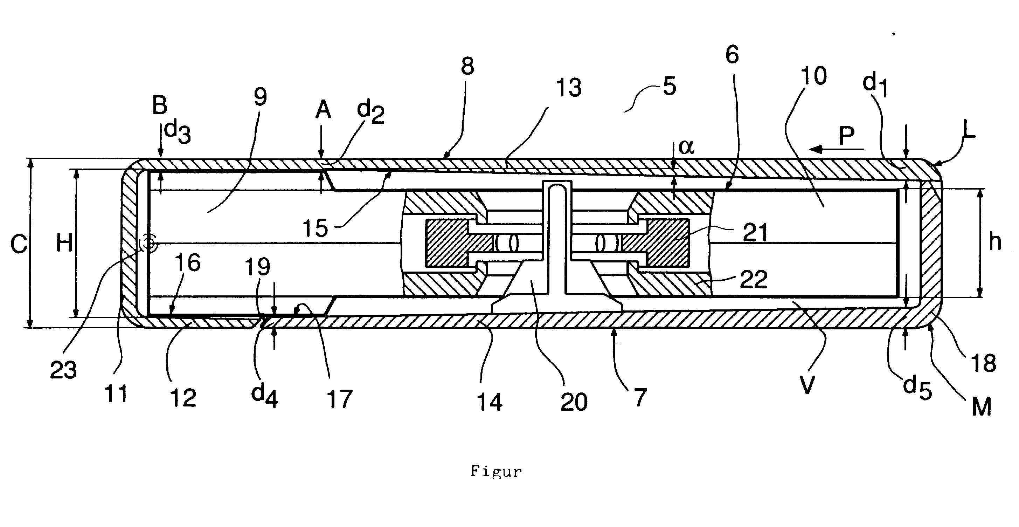

Ein Ausführungsbeispiel eines Behälters ist in der Zeichnung dargestellt und wird nachfolgend beschrieben.

Ein Behälter 5 mit einer darin aufgenommenen Kompakt-Kassette 6 (gemäß DIN 45 516) ist im Querschnitt dargestellt und besteht im wesentlichen aus Bodenteil 7 und Deckelteil 8. Die Kassette 6 besitzt einen Kopfteil 9 mit vergrößerter Höhe H im Vergleich zur Höhe h des übrigen Kassettenkörpers 10. Wenn eine andere Bandkassette ebenfalls an einer Längsseite eine Erhöhung aufweist, die einem ganz anderen Zweck als der Aufnahme von geräteseitigen Magnetköpfen dienen kann, ist der erfindungsgemäße Behälter ebenfalls für diese Bandkassette geeignet.

Der Deckelteil ist mit einer Tasche 11 zur Aufnahme des Kopfteils 9 der Kassette 6 ausgebildet. Die Tasche 11 besitzt die Taschenvorderwand 12.

Der Deckelteil 8 umfaßt eine Deckelwand 13 und der Bodenteil 7 eine Bodenwand 14. Letztere ist mit der Rückwand 18 verbunden. Bodenteil-Seitenwände sind durch die gewählte Schnittdarstellung nicht sichtbar. Von der Außenlängskante L der Deckelwand 13 in Richtung des Pfeils p, also in Richtung zur Tasche 11, nimmt die Wanddicke d deutlich ab. Vom Wert d₁ bis zum Wert d₂ nimmt das Verhältnis etwa wie 2:1 ab. Größenordnungsmäßig soll dies Dickenverhältnis im Bereich zwischen etwa 3:1 bis etwa 1,5:1 abnehmen. Im gewählten Beispiel nimmt die Dicke von der Kante L bis zur Längslinie A kontinuierlich ab, um dann bis zur Längslinie B etwas wieder anzusteigen. Bei der Linie A ist somit eine Senke vorgesehen und der Verlauf der Dickenabnahme über die Querachse ist diskontinuierlich.

Es ist aber grundsätzlich möglich, auch bis zum Boden der Tasche 11 (in der Nähe der Linie B) eine kontinuierliche Abnahme der Dicke der Deckenwand 13 zu realisieren. Der Abnahmewinkel α liegt in der Darstellung bei etwa 50 Winkelminuten. Er kann jedoch im Bereich von ca. 30 bis ca. 120 Winkelminuten, insbesondere zwischen 30 und 60 Winkelminuten, liegen.

Für die Dimensionierung des Behälters 5 ist es optimal, wenn die Innenfläche 15 der Deckelwand 13 zur Innenfläche 16 der Taschenvorderwand 12 parallel angeordnet ist. Wenn diese Flächen 15 und 16 auseinanderstrebend angeordnet sind, ergibt sich eine zu große Behälterhöhe H₁ > H in diesem Bereich. Der der Taschenvorderwand 12 benachbarte Innenflächenteil 17 der Bodenwand 14 kann zweckmäßig ebenfalls parallel liegend zur Innenfläche 15 ausgebildet sein.

Wie aus der Darstellung ersichtlich, wurde im Beispiel eine ebenfalls von der Außenlängskante M in der Dicke abnehmende Bodenwand 14 gewählt, wobei die Dicke d₃ in der Nähe der Rückwand 18 etwa der Dicke d₁ der Deckelwand 13 entspricht, aber die Dicke d₄ am Bodenwandausschnitt 19 etwas größer ist als die kleine Dicke d₂ an der Längslinie A der Deckelwand 13.

Damit ergibt sich etwa ein Rechteck-Quader-Hohlraum V, der innerhalb der Behälter-Außenwandflächen schrägliegend angeordnet ist.

Der Bodenteil 7 weist noch Arretierzapfen 20 auf, die in die Wickelkerne 21 der Kassette 6 im Kassettengehäuse 22 eingreifen.

Von der Form der Arretierzapfen 20 und der Antriebsöffnung in den Wickelkernen kann es abhängen, welche Lage die Kassette 6 im Behälter 5 einnehmen kann.

In diesem dargestellten Beispiel sind auch, außer oben besagten Merkmalen, Innenform des Behälters 5 und Arretierzapfen 20 geeignet auf die Kassette 6 abgestimmt, um eine sehr günstige niedrige Behälterhöhe C zu erhalten.

Ein Behälter für eine Bandkassette von etwa Quaderform mit erhöhtem Kopfteil ist mit je einer mittels Gelenkeinrichtungen zueinander bewegbaren Boden- und Deckelwand ausgebildet. Dabei ist eine der besagten Wände von ihrer Außenlängskante in Richtung zu den Gelenkeinrichtungen mit abnehmbarer Wanddicke ausgebildet. Die andere Wand kann ebenfalls eine in derselben Richtung abnehmende Wanddicke aufweisen. Dabei kann eine der Wände auch mit einer Tasche zur Aufnahme des erhöhten Kopfteils versehen sein. Die Innenfläche der mit der Tasche versehenen Wand kann auch zumindest zur Innenfläche der Vorderwand der Tasche parallel angeordnet sein.

Der Behälter ist für jede Kassette der oben näher bezeichneten Art für Audio-, Video- und/oder Datenaufzeichnung vorteilhaft verwendbar, da eine minimale Gesamthöhe C des Behälters bei minimal einzusetzendem Material erzielt wird.

## Patentansprüche

1. Behälter, im wesentlichen von Rechteck - Quaderform, für Bandkassetten (6) mit erhöhtem Kopfteil, insbesondere für Kompakt - Kassetten, mit einem Bodenteil (7), der wenigstens eine Bodenwand (14), sowie eine Rückwand (18) und/oder eine Vorderwand und Bodenteil - Seitenwände aufweist, und mit einem zumindest aus einer Deckelwand (13) bestehendem Deckelteil (8), der eine Aufnahmetasche (11) mit wenigstens einer Taschenvorderwand (12) für die Bandkassette (6), aufiveist und wobei entlang der Querachse des Behälters (5) die Wanddicke (d) der Deckelwand (13) von ihrer Außenlängskante (L) in Richtung auf die Aufnahmetasche (11) abnimmt, dadurch gekennzeichnet, daß die Wanddicke (d) der Deckelwand (13) von der Außenlängskante (L) in Richtung auf die Aufnahmetasche (11) kontinuierlich abnimmt und daß zwischen den Innenflächen (15) und der Außenfläche der Deckelwand (13) ein Winkel (α) zwischen 30 und 120 Winkelminuten, insbesondere von 30 bis 60 Winkelminuten vorgesehen ist.

2. Behälter nach Anspruch 1, dadurch gekennzeichnet, daß die Innenfläche (16) der Taschenvorderwand (12) zur Innenfläche (15) der Deckelwand (13) mit abnehmender Wanddicke (d) zumindest parallel angeordnet ist.

3. Behälter nach Anspruch 1 oder 2, dadurch gekennzeichnet, daß die Wanddicke (d) der Deckelwand (13) von der Außenkante (L) in Richtung zur Aufnahmetasche (11) im Verhältnis (d₁:d₂) im Bereich zwischen 3:1 bis 1,5:1, insbesondere von 2:1 abnimmt.

4. Behälter nach Anspruch 1, 2 oder 3, dadurch gekennzeichnet,daß die Wanddicke (d₁) der Deckelwand (13), beginnend von der Außenlängskante (L) bis zum Punkt (A), wo sich der Sprung des erhöhten Kopfteils der Kompaktkassette befindet, kontinuierlich abnimmt, um dann wieder bis zur gegenüberliegenden Außenlangskante kontinuierlich anzusteigen.

5. Behälter nach Anspruch 1, 2 oder 3, dadurch gekennzeichnet, daß der geschlossene Behälter (5) einem im wesentlichen quaderförmigen, innerhalb der Außenkontur der Wände (13, 14) schrägliegenden Aufnahmeraum (V) für die Bandkassette (6) aufweist.

6. Behälter nach einem der Ansprüche 1 bis 4, dadurch gekennzeichnet, daß die Wanddicke (d₅, d₄) der Bodenwand (14) in der selben Richtung (P) wie die Deckelwand (13) abnimmt.

7. Behälter nach Anspruch 6, dadurch gekennzeichnet, daß zwischen der Innenfläche (17), der Bodenwand (14) und ihrer Außenfläche ein Winkel zwischen 30 und 120 Winkelminuten, insbesondere von 30 bis 60 Winkelminuten vorgesehen ist.

8. Behälter nach Anspruch 6 oder 7, dadurch gekennzeichnet, daß die Wanddicke (d) der Deckelwand (13) und gegebenenfalls der Bodenwand (14) von der Außenlängskante (L bzw. M) in Richtung der Gelenkeinrichtung (23) im Verhältnis (d₁: d₂ bzw. d₅:d₄) im Bereich zwischen 3:1 bis 1,5:1, insbesondere von 2:1 abnimmt.

## Claims

1. A container, substantially of rectangular parallelepiped form, for tape cassettes (6) having an elevated head part, in particular for compact cassettes, with a bottom part (7) which has at least one bottom wall (14) and a rear wall (18) and/or a front wall and bottom-part side walls, and with a lid part (8) which comprises at least a lid wall (13) and has a receiving pocket (11) with at least one pocket front wall (12) for the tape cassette (6), and the wall thickness (d) of the lid wall (13), decreasing along the transverse axis of the container (5) from its outer longitudinal edge (L) in the direction of the receiving pocket (11), wherein the wall thickness (d) of the lid wall (13) decreases continuously from the outer longitudinal edge (L) in the direction of the receiving pocket (11), and wherein an angle (a) between 30 and 120 angular minutes, in particular of 30 to 60 angular minutes, is provided between the inner face (15) and the outer face of the lid wall (13).

2. The container as claimed in claim 1, wherein the inner face (16) of the pocket front wall (12) is arranged at least parallel with respect to the inner face (15) of the lid wall (13) with decreasing wall thickness (d).

3. The container as claimed in claim 1 or 2, wherein the wall thickness (d) of the lid wall (13) decreases from the outer edge (L) in the direction of the receiving pocket (11) at a ratio (d₁:d₂) in the range from about 3:1 to about 1.5:1, in particular of about 2:1.

4. The container as claimed in claim 1, or claims 2 or 3, wherein, starting from the outer longitudinal edge (L) up as far as the point (A) where there is the sudden change of the elevated head part of the compact cassette, the wall thickness (d₁) of the lid wall (13) decreases continuously to d₂, then to increase continuously again, up as far as the opposite outer longitudinal edge, to the wall thickness d₃.

5. The container as claimed in claim 1, 2 or 3, wherein the closed container (5) has a receiving space (V) for the tape cassette (6) which is substantially parallelepipedal and lies at a slant within the outer contour of the walls (13, 14).

6. The container as claimed in any of claims 1 to 4, wherein the wall thickness (d₅, d₄) of the bottom wall (14) decreases in the same direction (P) as that of the lid wall (13).

7. The container as claimed in claim 6, wherein an angle between 30 and 120 angular minutes, in particular of 30 to 60 angular minutes, is provided between the inner face (17) of the bottom wall (14) and its outer face.

8. The container as claimed in claim 6 or 7, wherein the wall thickness (d) of the lid wall (13) and, if appropriate, of the bottom wall (14) decreases from the outer longitudinal edge (L or M) in the direction of the hinge device (23) at a ratio (d₁: d₂ or d₅: d₄) in the range from 3:1 to 1.5:1, in particular of 2:1.

## Revendications

1. Récipient de forme générale parallélépipédique rectangle pour cassettes de bande (6) à partie tête surélevée, en particulier pour cassettes compactes, comportant une partie fond (7) qui présente au moins une paroi de fond (14) ainsi qu'une paroi arrière (18) et/ou une paroi avant et des parois latérales, et une partie couvercle (8) constituée au moins d'une paroi de couvercle (13) et présentant une poche réceptrice (11) ayant au moins une paroi avant (12) destinée à recevoir la cassette de bande (6), l'épaisseur (d) de la paroi de couvercle (13) décroissant depuis le côté longitudinal extérieur (L) de celle-ci en direction de la poche réceptrice (11) le long de l'axe transversal du récipient (5), caractérisé par le fait que l'épaisseur (d) de la paroi de couvercle (13) décroît de façon continue depuis le côté longitudinal extérieur (L) en direction de la poche réceptrice (11) et que, entre les faces intérieures (15) et la face extérieure de la paroi de couvercle (13), est prévu un angle (α) compris entre 30 et 120 minutes, en particulier de 30 à 60 minutes.

2. Récipient selon la revendication 1, caractérisé par le fait que la face intérieure (16) de la paroi avant (12) de la poche est placée au moins parallèlement à la face intérieure (15) de la paroi de couvercle (13) d'épaisseur (d) décroissante.

3. Récipient selon l'une des revendications 1 et 2, caractérisé par le fait que l'épaisseur (d) de la paroi de couvercle (13) décroît depuis le côté extérieur (L) en direction de la poche réceptrice (11) dans un rapport (d₁/d₂) compris entre environ 3 et environ 1,5, en particulier d'environ 2.

4. Récipient selon l'une des revendications 1 à 3, caractérisé par le fait que l'épaisseur (d1) de la paroi de couvercle (13) décroît de façon continue depuis le côté longitudinal extérieur (L) jusqu'au point (A) où se trouve le saut de la partie tête surélevée de la cassette compacte et ensuite croît de façon continue jusqu'au côté longitudinal extérieur opposé.

5. Récipient selon l'une des revendications 1 à 3, caractérisé par le fait que le récipient (5) fermé présente pour la cassette de bande (6) un espace récepteur (V) dans l'ensemble parallélépipédique et oblique à l'intérieur du contour extérieur des parois (13, 14).

6. Récipient selon l'une des revendications 1 à 4, caractérisé par le fait que l'épaisseur (d₅, d₄) de la paroi de fond (14) décroît elle aussi dans la même direction (P) que la paroi de couvercle (13).

7. Récipient selon la revendication 6, caractérisé par le fait qu'entre la face intérieure (17) et la face extérieure de la paroi de fond (14) est prévu un angle compris entre 30 et 120 minutes, en particulier de 30 à 60 minutes.

8. Récipient selon l'une des revendications 6 et 7, caractérisé par le fait que l'épaisseur (d) de la paroi de couvercle (13) et éventuellement de la paroi de fond (14) décroît depuis le côté longitudinal extérieur (L ou M) en direction du dispositif d'articulation (23) dans un rapport (d₁/d₂ ou d₅/d₄) compris entre 3 et 1,5, en particulier de 2.
